# EUROPÄISCHE PATENTANMELDUNG

(11) **EP 2 075 384 A2**
(43) Veröffentlichungstag der Anmeldung: **01.07.2009**
(21) Anmeldenummer: 08169005.9
(22) Anmeldetag: 13.11.2008
(51) Int. Cl.: E04B 1/58, E04B 2/78

(54) **Strebenelement für den Aufbau von Vorrichtungen zum Aufspannen von Werkstücken**

(30) Priorität: 30.11.2007 DE 202007016844 U
(71) Anmelder: Horst Witte Gerätebau Barskamp KG, 21354 Bleckede (DE)
(72) Erfinder: Witte, Horst, 21369 Nahrendorf (DE)
(74) Vertreter: Raffay & Fleck

(57) **Zusammenfassung**

Strebenelement für den Aufbau von Vorrichtungen zum Aufspannen von insbesondere komplex geformten Werkstücken mit zwei sich quer zu einer Strebenlängsrichtung erstreckenden Stirnseiten soll dahingehend verbessert werden, dass es einfach und kostengünstig herzustellen und auf einfache und zuverlässige Weise auch stirnseitig mit weiteren Elementen verbindbar ist. Hierzu wird vorgeschlagen, dass wenigstens an einer der Stirnseiten einstückig in der Strebe (1, 2) bzw. an dieser eine T-Nut (5) bzw. eine zu einer solchen T-Nut (5) korrespondierende T-förmige, zapfenartige Verlängerung (4) ausgebildet ist.

## Beschreibung

Die Erfindung betrifft ein Strebenelement für den Aufbau von Vorrichtungen zum Aufspannen von insbesondere komplex geformten Werkstücken.

Derartige Strebenelemente sind hinlänglich und in großer Varietät bekannt. Sie finden insbesondere Anwendung beim Aufbau von Aufspannvorrichtungen für Werkstücke mit komplexeren, dreidimensionalen Formen wie etwa Automobilblechteile, komplex geformte Teile für die Flugzeugfertigung und dergleichen. Insbesondere verwendet werden diese Vorrichtungen zum genauen Aufspannen derartiger Teile zum Zwecke der Vermessung, sei es für den Prototypenbau, sei es für die Qualitätskontrolle einer laufenden Produktion.

Aus derartigen Streben werden als Aufspannvorrichtungen gerüstartige Vorrichtungen aufgebaut, bei denen an vorgegebenen Punkten im Raum dann Halteeinrichtungen, z.B. Klemmelemente und dergleichen angeordnet werden. Ein solches System, das sich am Markt seit vielen Jahren bewährt hat, wird unter der Markenbezeichnung "Alufix" am Markt angeboten. Bei diesem System handelt es sich um ein sehr flexibles und insbesondere wieder verwertbares System, bei dem über in vorgegebenen Abständen angebrachte Passlochbohrungen Verbindungselemente eingesetzt und die einzelnen Strebenelemente flexibel miteinander verbunden werden können.

In der jüngeren Entwicklung zeichnet sich verstärkt ein Bedarf nach kostengünstigeren Möglichkeiten ab, wobei zu Gunsten eines geringeren Preises Einbußen in der Flexibilität in Kauf genommen werden. Entsprechend gibt es auch bereits seit längerem aus einfachen Strangpressprofilen aus Leichtmetall gebildete Streben, die hier Verwendung finden. Diese Streben werden durch einfaches Ablängen von Strangstücken gewonnen, wobei sie passgerecht abgelängt werden können. Häufig haben diese Streben eine eckige Querschnittsstruktur und weisen auf ihren Längsseiten Einrichtungen, insbesondere T-Nuten, zum Festlegen weiterer Elemente auf. Die Stirnseiten der Streben werden dabei in der Regel nach dem Schnitt unbehandelt belassen, eine Festlegung an der Stirnseite erfolgt über seitlich anzubringende Winkelelemente (vgl. z.B. die Darstellung in Fig. 1 in der WO 01/08855).

Ferner ist es aus der DE 41 32 655 bekannt, mit Hilfe von gesondert an der Strebe anzuordnenden Elementen die Stirnseite z.B. mit einem T-Nutenstein zu versehen und so für eine Verbindung mit T-Nuten an weiteren Profilen vorzubereiten (vgl. in der DE 41 32 655 z.B. Fig. 3).

Diese bekannten Maßnahmen sind jedoch aufwändig und kostspielig einerseits im Aufbau der Vorrichtungen, andererseits bei der Vorbereitung der Strebenelemente. Müssen nämlich bei der einen Variante gesonderte Eckverbinder bereitgehalten und aufwändig mit den angrenzenden Strebenelementen verbunden werden, ist bei der zweitgenannten Variante zunächst ein extra Element mit einem daran angeordneten T-Nutenstein in aufwändiger Weise an der Stirnseite des Strebenelementes zu befestigen, wobei dieses Element kompliziert und kostspielig in der Herstellung ist.

Mit der Erfindung soll hier Abhilfe geschaffen werden. Insbesondere ist es Aufgabe der Erfindung, ein Strebenelement der eingangs genannten Art anzugeben, welches einfach und kostengünstig herzustellen und auf einfache und zuverlässige Weise auch stirnseitig mit weiteren Elementen verbindbar ist. Gelöst wird diese Aufgabe erfindungsgemäß durch ein Strebenelement mit den Merkmalen des Anspruchs 1. Vorteilhafte Weiterbildungen der Erfindung sind in den abhängigen Ansprüchen 2 bis 7 angegeben.

Erfindungsgemäß wird ein Strebenelement demnach so gebildet, dass es an wenigstens einer Stirnseite eine Verbindungsstruktur aufweist, die einstückig angeformt ist. Diese Verbindungsstruktur ist entweder durch eine T-Nut oder aber alternativ durch eine zu einer solchen T-Nut korrespondierende T-förmige, zapfenartige Verlängerung ausgebildet. Mit einer solchen einstückig zu einem Verbindungselement ausgeformten Verbindungsstruktur kann das erfindungsgemäße Strebenelement sehr einfach und elegant entweder mit weiteren, an ihrer Stirnseite mit korrespondierenden Verbindungsstrukturen ausgerüsteten Strebenelementen stirnseitig oder aber mit anderen Elemente an anderen Flächen, die entsprechende T-Nuten oder T-förmige, zapfenartige Verlängerungen aufweisen. Die Verbindungsstrukturen, T-Nut bzw. T-förmige, zapfenartige Verlängerung, können bspw. durch spanende Bearbeitungsverfahren, insbesondere Fräsen, an einer oder beiden Stirnseiten des Strebenelementes herausgebildet werden.

Grundsätzlich kann das Strebenelement jede erdenkliche Form aufweisen, wobei ein kostengünstig herzustellendes Strebenelement aus einem Strangpressprofil zu bevorzugen ist. Das Strebenelement kann an seinen Längsseiten bzw. seinem Längsumfang glatte Oberflächen aufweisen, z.B. um als gerüstverstärkende Diagonalstrebe zu dienen, es kann aber auch und insbesondere an wenigstens einer Seitenfläche eine gleichartig wie eine T-Nut der Verbindungsstruktur an der Stirnseite ausgebildete T-Nut aufweisen, die dann typischerweise in Längsrichtung des Strebenelementes verläuft. Dies hat den Vorteil, dass ein solches Strebenelement flexibel mit weiteren gleichartig gebildeten Strebenelementen verbindbar ist. Insbesondere zu bevorzugen ist dabei ein vier Seitenflächen aufweisendes Strebenelement mit T-Nuten dieser Art in allen vier Seitenflächen.

Auch wenn es grundsätzlich denkbar ist und für bestimmte Anwendungen sogar von Vorteil sein kann, wenn ein erfindungsgemäßes Strebenelement nur an einer seiner Stirnseiten eine erfindungsgemäße Verbindungsstruktur in Form einer T-Nut bzw. einer T-förmigen, zapfenartigen Verlängerung aufweist, so werden die erfindungsgemäßen Strebenelemente in der überwiegenden Zahl der Fälle an beiden Stirnseiten entsprechende Verbindungsstrukturen enthalten. Dabei ist es grundsätzlich egal und hängt allein von der Anwendung beim Aufbau der Vorrichtung ab, ob an beiden Stirnseiten etwa T-Nuten oder T-förmige, zapfenartige Verlängerungen angeformt sind oder aber an einer Stirnseite eine T-Nut, an der anderen eine T-förmige, zapfenartige Verlängerung.

Weiterhin ergibt sich eine Flexibilität, die anwendungsabhängig gewählt wird, dadurch, dass die Verbindungsrichtungen der an den beiden Stirnseiten angeordneten Verbindungsstrukturen, also die Längsrichtung der T-förmigen, zapfenartigen Verlängerung bzw. die Verlaufsrichtung der T-Nut parallel oder aber auch senkrecht zueinander stehend gewählt werden können.

Letztlich wird bevorzugt, wenn die erfindungsgemäßen Strebenelemente aus einem Leichtmetall bzw. aus einer Leichtmetalllegierung bestehen, insbesondere aus Aluminium bzw. einer Aluminiumlegierung.

Die erfindungsgemäßen Strebenelemente eignen sich insbesondere für einen einmaligen, fest vorgegebenen Aufbau einer Aufspannvorrichtung für Werkstücke, indem sie nach Zusammenfügen von T-Nut und T-förmiger, zapfenartiger Verlängerung in der gewünschten Position verklebt oder mit sonstigen Mitteln, z.B. durch Verschrauben, arretiert und festgelegt werden. Bei einer solchen Verwendung ist es insbesondere nicht erforderlich, etwa nach dem Herausbilden der Verbindungsstrukturen an der T-Nut bzw. der T-förmigen, zapfenartigen Verlängerung entstandene scharfe Kanten zu glätten bzw. die Schnittkanten zu entgraten. Natürlich können erfindungsgemäße Strebenelemente aber auch "veredelt" werden, indem eine solche Glättung und Entgratung vorgenommen wird, insbesondere dann, wenn eine mehrfache Verwendbarkeit der Strebenelemente vorgesehen und beabsichtigt ist.

Weitere Vorteile und Merkmale der Erfindung ergeben sich aus der nachfolgenden Beschreibung eines Ausführungsbeispiels anhand der beigefügten Figuren. Dabei zeigen:
- Figur 1: in einer prinzipartigen, dreidimensionalen Darstellung ein erfindungsgemäßes Strebenelement nebst zwei Aufsichten auf die einander gegenüber liegenden Stirnseiten,
- Figur 2: in vergleichbaren Ansichten ein zweites Ausführungsbeispiel eines erfindungsgemäßen Strebenelementes,
- Figur 3: in vergleichbaren Ansichten ein drittes Ausführungsbeispiel eines erfindungsgemäßen Strebenelementes,
- Figur 4: in vergleichbaren Ansichten ein viertes Ausführungsbeispiel eines erfindungsgemäßen Strebenelementes,
- Figur 5: in vergleichbaren Ansichten ein fünftes Ausführungsbeispiel eines erfindungsgemäßen Strebenelementes,
- Figur 6: in vergleichbaren Ansichten ein sechstes Ausführungsbeispiel eines erfindungsgemäßen Strebenelementes,
- Figur 7: in vergleichbaren Ansichten ein siebtes Ausführungsbeispiel eines erfindungsgemäßen Strebenelementes,
- Figur 8: in vergleichbaren Ansichten ein achtes Ausführungsbeispiel eines erfindungsgemäßen Strebenelementes, und
- Figur 9: eine weitere Ausgestaltungsvariante eines erfindungsgemäßen Strebenelementes mit glattwandigem, im Querschnitt kreisförmigen Profil, aufgesetzt auf ein herkömmliches Strebenelement.

In den Figuren sind in jeweils schematischen Ansichten insgesamt neun unterschiedliche Ausführungsvarianten für erfindungsgemäße Strebenelemente dargestellt, die grundsätzlich einen Überblick über die verschiedenartigen Möglichkeiten der Gestaltung geben, ohne jedoch auch nur annähernd den Anspruch auf Vollständigkeit hinsichtlich der möglichen Variationen zu erheben.

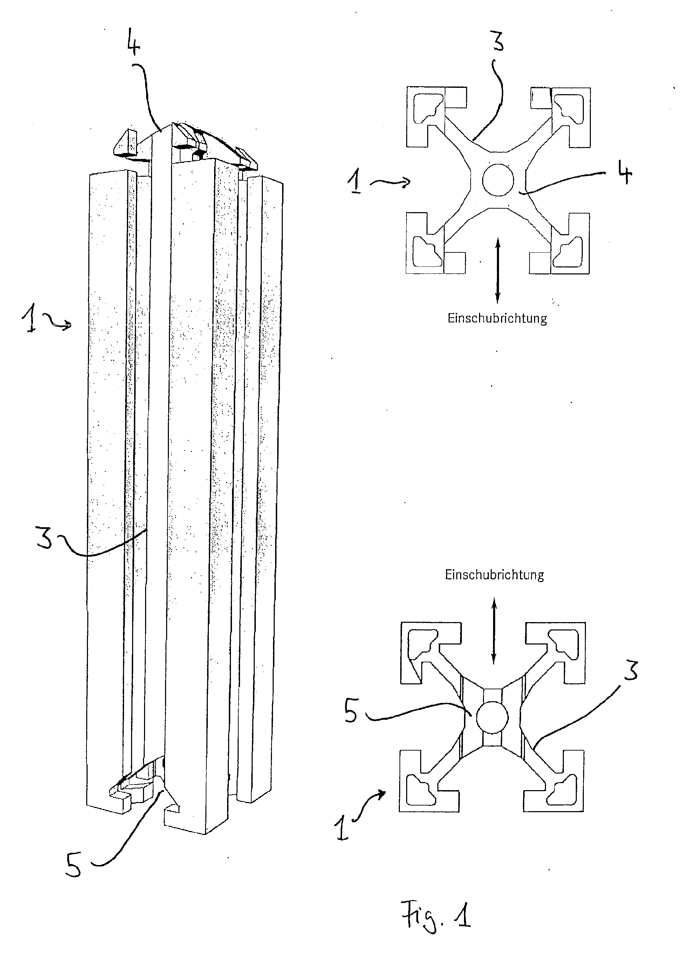

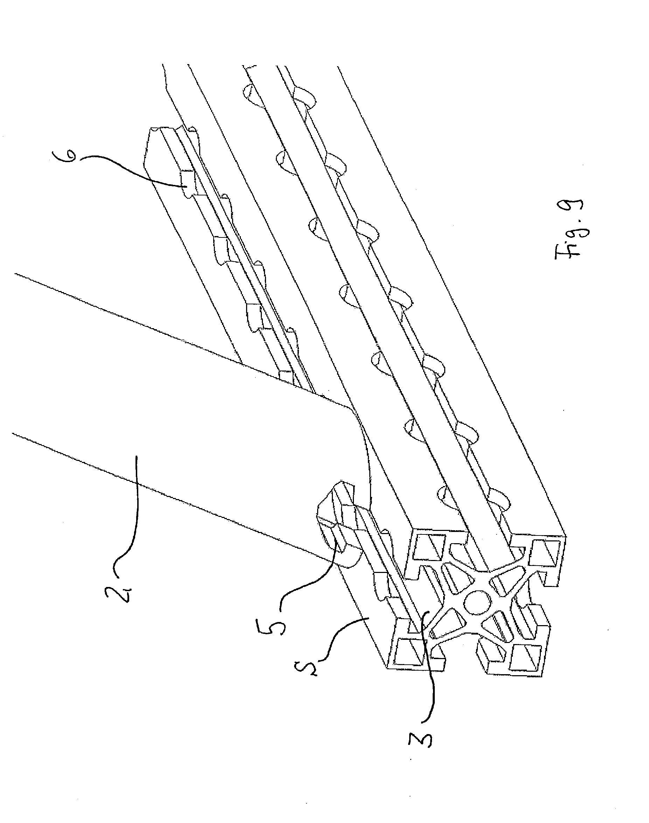

In den Figuren sind zunächst einmal zwei unterschiedliche Grundvarianten erfindungsgemäßer Strebenelemente gezeigt. Während in den Figuren 1 bis 8 Strebenelemente 1, die aus einem im Querschnitt im wesentlichen quadratischen Grundprofil mit allseitig in Längsrichtung der Streben verlaufenden T-Nuten 3 basieren, ist in Figur 9 ein erfindungsgemäßes Strebenelement 2 gezeigt, welches aus einem glattwandigen Profilelement mit rundem Querschnitt hergestellt wurde.

Sämtlichen in den Figuren 1 bis 8 dargestellten, aus einem Vierkantprofil mit in dessen Längsrichtung auf den jeweiligen Längsseiten eingebrachten T-Nuten 3 hergestellten Strebenelemente 1 ist gemein, dass sie an beiden einander gegenüber liegenden Stirnseiten jeweils Verbindungsstrukturen in Form von entweder T-förmigen, zapfenartigen Verlängerungen 4 oder dort angeordneten T-Nuten 5 aufweisen. Die T-Nuten 5 entsprechen dabei in ihrem Profil den T-Nuten 3, die T-förmigen, zapfenartigen Verlängerungen 4 sind korrespondierend zu dem Profil der T-Nuten 5 bzw. 3 ausgebildet und können zum Verbinden der Einzelelemente in eine bzw. beide dieser T-Nuten 3 bzw. 5 eingreifen.

Die Verbindungsstrukturen an den Stirnseiten der Strebenelemente 1, die T-förmigen, zapfenartigen Verlängerungen 4 bzw. die T-Nuten 5, sind einstückig aus dem Material des Strebenelementes gebildet, vorzugsweise durch spanende Bearbeitung, insbesondere Fräsen. Die Strebenelemente 1, aber auch 2, die hier bevorzugt aus Aluminium bzw. einer Aluminiumlegierung bestehen, eignen sich besonders gut für eine solche spanende Bearbeitung, so dass die Verbindungsstrukturen in Form der T-Nuten 5 bzw. T-förmigen, zapfenartigen Verlängerungen 4 mittels einer solchen Bearbeitung einfach und kostengünstig angebracht werden können.

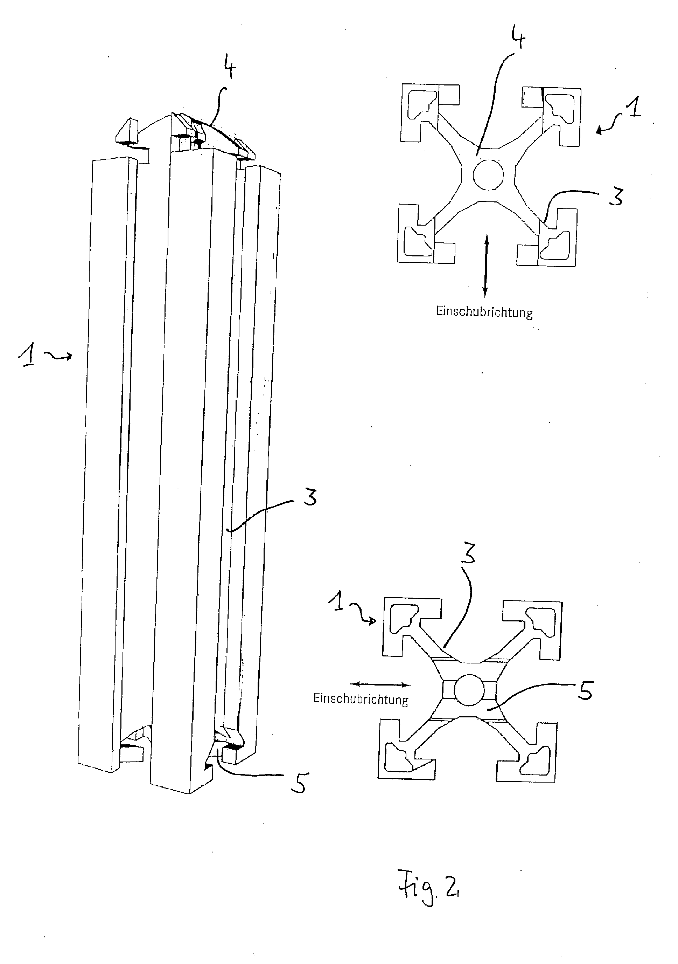

Im Wesentlichen unterscheiden sich die in Figuren 1 bis 8 dargestellten erfindungsgemäßen Strebenelemente 1 durch die Kombination und jeweilige Anordnung der Verbindungsstrukturen. So ist in Figur 1 ein Strebenelement 1 dargestellt, welches an den einander gegenüber liegenden Stirnseiten einerseits eine T-förmige, zapfenartige Verlängerung 4, andererseits eine T-Nut 5 aufweist. In diesem Ausführungsbeispiel sind die Verlaufsrichtungen der Verlängerung 4 in seiner Längsrichtung und der T-Nut 5, in den Figuren auch als Einschubrichtung bezeichnet, gleichgerichtet parallel. In Figur 2 dagegen ist prinzipiell ein ähnlich aufgebautes Strebenelement 1 dargestellt, bei dem allerdings die Verlaufsrichtungen der Verlängerung 4 und der T-Nut 5 um 90° zu einander verdreht sind, was durch die Pfeile der Einschubrichtungen deutlich gemacht ist.

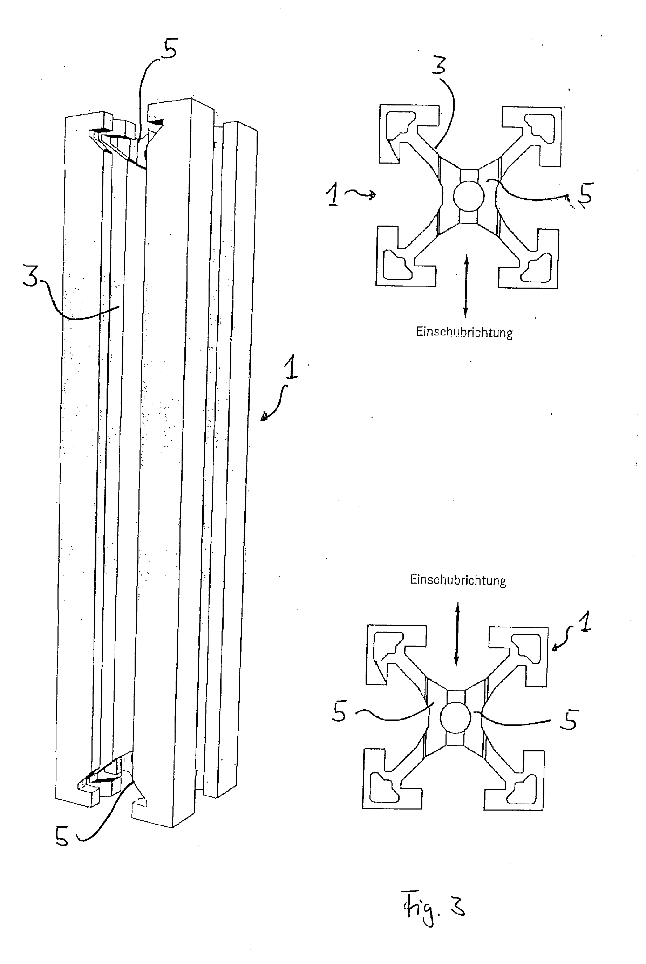

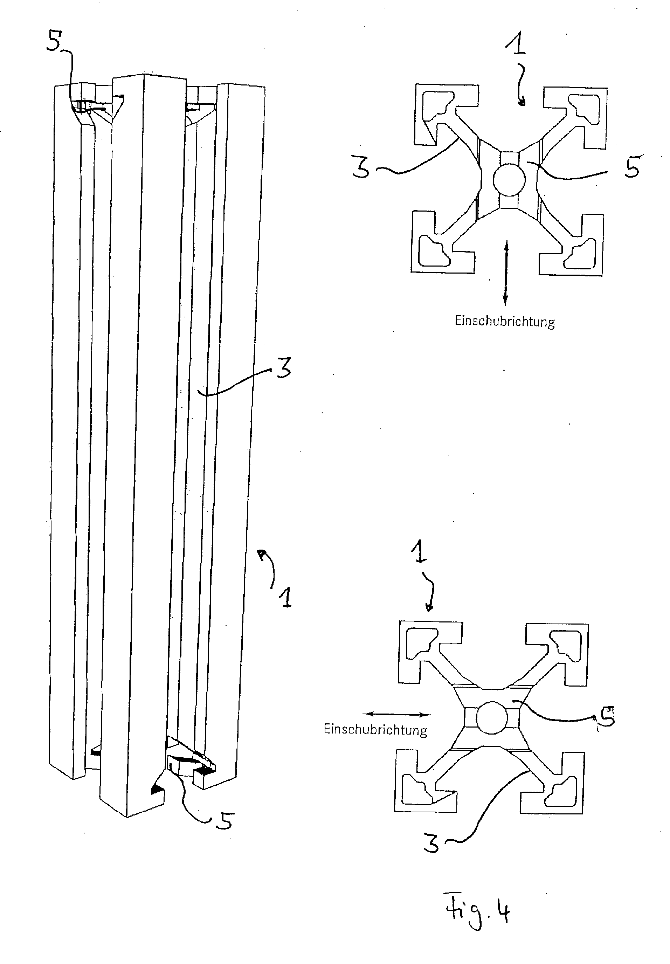

In den Figuren 3 und 4 sind Strebenelemente 1 mit an beiden Stirnseiten angeordneten T-Nuten 5 dargestellt, in Figur 3 mit parallelen und in Figur 4 mit um 90° versetzten Verlaufs- bzw. Einschubrichtungen.

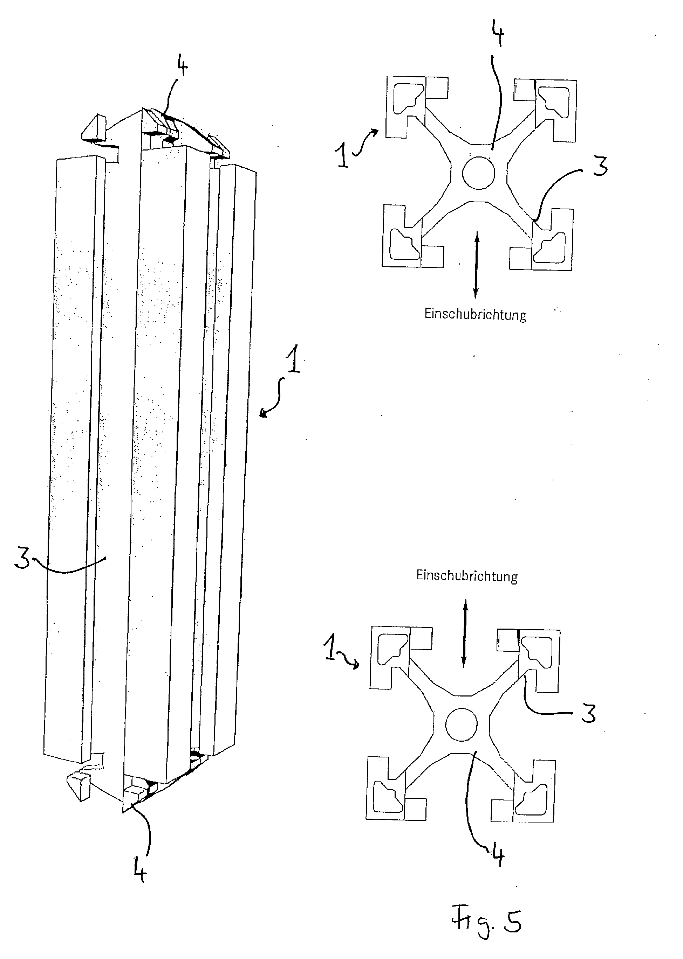

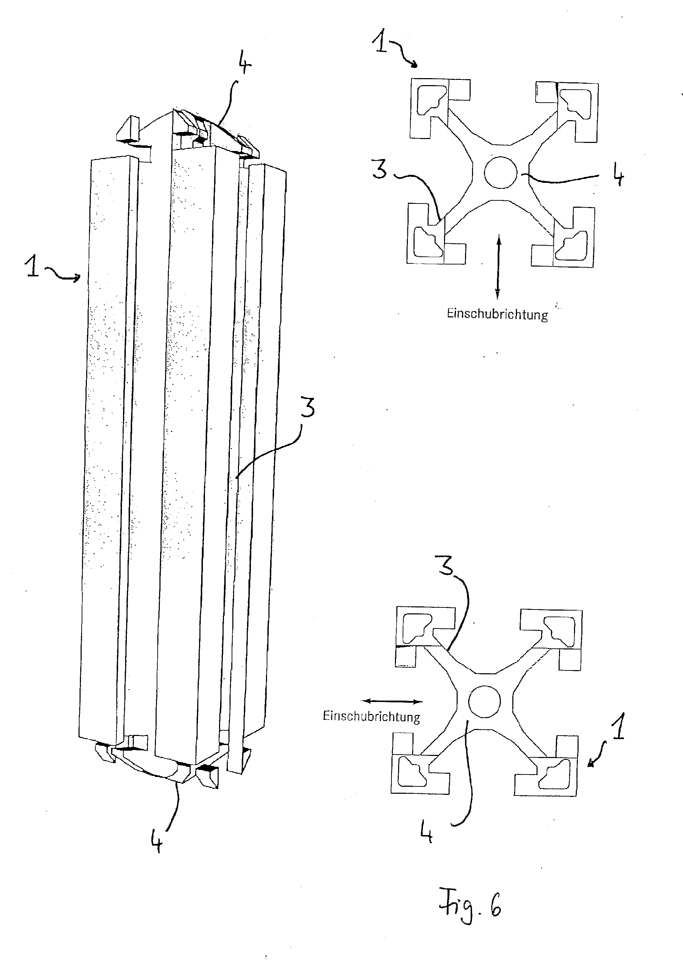

In den Figuren 5 und 6 sind in analoger Weise Strebenelemente 1 mit an beiden Stirnseiten angeformten Verlängerungen 4 dargestellt, in Figur 5 mit parallelen Verlaufsrichtungen, in Figur 6 um 90° verdreht.

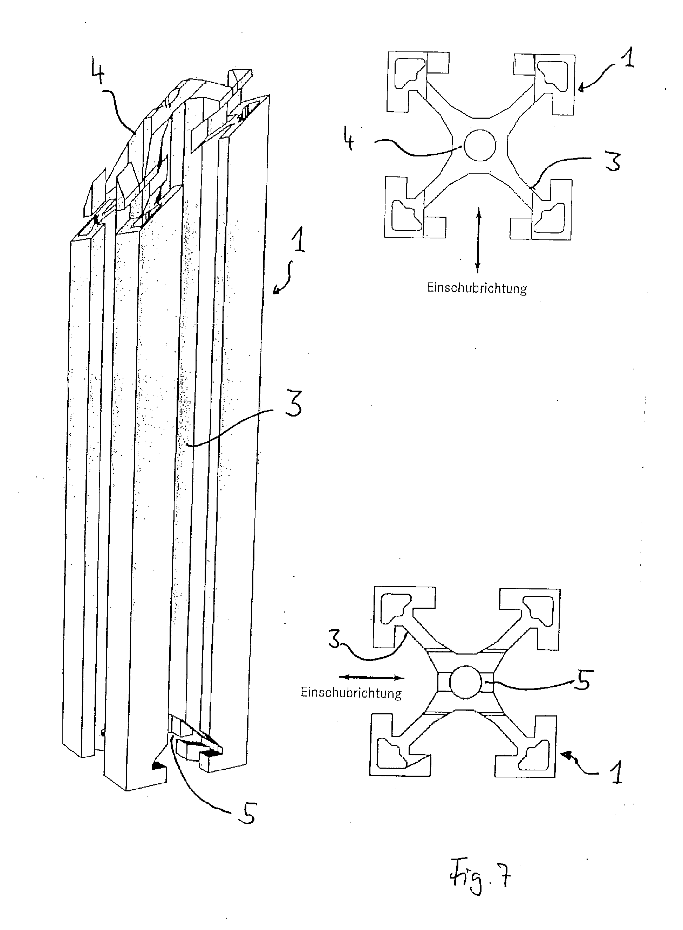

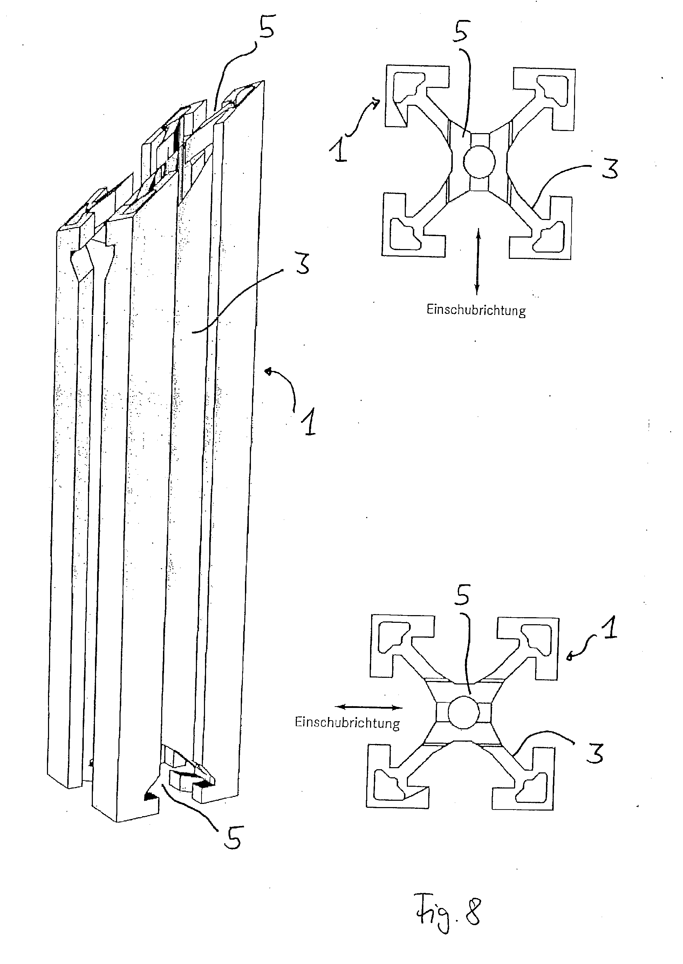

Während in den Figuren 1 bis 6 stets solche erfindungsgemäßen Streben 1 dargestellt sind, die stirnseitig im Wesentlichen rechtwinklig zur Längserstreckung angeordnete Anschlussflächen aufweisen, sind in den Figuren 7 und 8 exemplarisch Strebenelemente 1 gezeigt mit schräg geschnittenen Anschlussflächen, hier etwa in einem Winkel von 45° zu der Längsrichtung. Diese erlauben eine schräg im Raum verlaufende bzw. diagonale Einbaurichtung. Gezeigt sind hier in Figur 7 einerseits eine auf der schrägen Stirnseite angeordnete Verlängerung 4, andererseits in Figur 8 eine dort angeordnete T-Nut 5. In beiden Fällen sind die Einschubrichtungen der auf der schräg geschnittenen Anschlussfläche sitzenden Verbindungsstrukturen um 90° versetzt zu der Einschubrichtung der auf einer gerade (im 90°-Winkel zu der Längsrichtung) geschnittenen Anschlussfläche an der gegenüber liegenden Stirnseite angeordneten T-Nut 5.

In Figur 9 schließlich ist ein wie eingangs bereits erwähnt anders gestaltetes erfindungsgemäßes Strebenelement 2 dargestellt, welches an einer Stirnseite mit einer T-Nut 5 versehen ist. Dieses Strebenelement 2, welches ebenfalls aus einem Strangpressprofil hergestellt ist und aus Aluminium bzw. einer Aluminiumlegierung besteht, hat einen kreisrunden Querschnitt und eine glatte Manteloberfläche. Die mit der T-Nut 5 versehene Stirnseite ist schräg zur Längsrichtung des Strebenelementes 2 geschnitten, so dass dieses Element als Diagonalstrebe dienen kann. In der Figur 9 ist dieses Element aufgesetzt auf ein herkömmliches Strebenelement S mit unbehandelten Stirnflächen, welches wiederum T-Nuten 3 an seinen Seitenflächen 3 trägt. Verbunden werden kann dieses Element z.B. durch ein Verbindungsstück in Form eines Doppel-T. Bei dem Strebenelement S sind zusätzlich in Rasterabständen Bohrungen 6 in die T-Nut 3 eingebracht, die der Verbindung mit weiteren Anbauelementen dienen können.

Wie bereits eingangs angemerkt, zeigen die hier dargestellten Ausführungsbeispiele lediglich eine Übersicht über die mannigfaltigen Möglichkeiten, erfindungsgemäße Strebenelemente zu gestalten. Insbesondere können die Strebenelemente 1 auch nur einseitig mit einer Verbindungsstruktur in Form einer Verlängerung 4 bzw. einer T-Nut 5 versehen sein. Andere Außenformen der Strebenelemente sind denkbar, wie auch weitere Kombinationen von Verbindungsstrukturen in Form von Verlängerungen 4 und T-Nuten 5.

Mit den erfindungsgemäßen Strebenelementen, die einfach und kostengünstig hergestellt werden können, kann eine einfache und dauerhafte Verbindung zu einer Vorrichtung zum Aufspannen von Werkstücken hergestellt werden. So können z.B. die Verbindungsstrukturen in Form der Verlängerungen 4 und T-Nuten 5 durch Verkleben mit einander verbunden oder mit einander verschraubt werden. Insbesondere ist es bei einer solchen Art der Verbindung nicht erforderlich, die vorzugsweise durch spanende Bearbeitung, wie etwa Fräsen, aus einem Strangpressprofilabschnitt gewonnenen Verbindungsstrukturen durch Entgraten oder sonstige Vorgänge zum Abrunden der Kanten nachzubearbeiten, was letztlich wiederum Kosten spart.

### Bezugszeichenliste

- 1: Strebenelement
- 2: Strebenelement
- 3: T-Nut
- 4: T-förmige, zapfenartige Verlängerung
- 5: T-Nut
- 6: Bohrung

- S: Strebenelement

## Patentansprüche

1. Strebenelement für den Aufbau von Vorrichtungen zum Aufspannen von insbesondere komplex geformten Werkstücken mit zwei sich quer zu einer Strebenlängsrichtung erstreckenden Stirnseiten, **dadurch gekennzeichnet, dass** wenigstens an einer der Stirnseiten einstückig in der Strebe (1, 2) bzw. an dieser eine T-Nut (5) bzw. eine zu einer solchen T-Nut (5) korrespondierende T-förmige, zapfenartige Verlängerung (4) ausgebildet ist.

2. Strebenelement nach Anspruch 1, **dadurch gekennzeichnet, dass** es einen rechteckigen oder quadratischen Querschnitt aufweist und an wenigstens einer quer zu den Stirnseiten verlaufenden Seitenfläche eine im wesentlichen in der Strebenlängsrichtung verlaufende T-Nut (3) aufweist mit einem Profil, das im wesentlichen dem Profil einer T-Nut (5) an der Stirnseite identisch ist bzw. zu einer T-förmigen, zapfenartigen Verlängerung (4) an der Stirnseite korrespondiert.

3. Strebenelement nach Anspruch 2, **dadurch gekennzeichnet, dass** es an allen vier Seitenflächen in Strebenlängsrichtung verlaufende T-Nuten (3) mit den in Anspruch 2 genannten Eigenschaften aufweist.

4. Strebenelement nach einem der vorhergehenden Ansprüche, **dadurch gekennzeichnet, dass** es an beiden Stirnseiten Verbindungsstrukturen in Form einer T-Nut (5) und/oder einer T-förmigen, zapfenartigen Verlängerung (4) aufweist.

5. Strebenelement nach Anspruch 4, **dadurch gekennzeichnet, dass** die Verlaufsrichtung einer T-Nut (5) und/oder eine Längsrichtung der T-förmigen, zapfenartigen Verlängerung (4) an beiden Stirnseiten parallel verlaufen.

6. Strebenelement nach Anspruch 4, **dadurch gekennzeichnet, dass** die Verlaufsrichtung einer T-Nut (5) und/oder eine Längsrichtung der T-förmigen, zapfenartigen Verlängerung (4) an beiden Stirnseiten im Wesentlichen senkrecht zueinander stehen.

7. Strebenelement nach einem der vorstehenden Ansprüche, **dadurch gekennzeichnet, dass** es aus Leichtmetall bzw. einer Leichtmetalllegierung besteht, vorzugsweise aus Aluminium bzw. einer Aluminiumlegierung.
